# EUROPÄISCHE PATENTANMELDUNG

(11) **EP 2 447 190 A1**
(43) Veröffentlichungstag der Anmeldung: **02.05.2012**
(21) Anmeldenummer: 11008584.2
(22) Anmeldetag: 26.10.2011
(51) Int. Cl.: B65D 88/76, B65D 88/08, B65D 90/02, E03B 3/03

(54) **Aus Kunststoff gefertigter Erdtank**

(30) Priorität: 26.10.2010 DE 202010014654 U
(71) Anmelder: Wisy AG, 63699 Kefenrod (DE)
(72) Erfinder: Winkler, Norbert, 63699 Kefenrod (DE)
(74) Vertreter: Hebing, Norbert

(57) **Zusammenfassung**

Um den Boden eines aus Kunststoff gefertigten Erdtanks (1) zu stabilisieren, damit dieser dem Grundwasserdruck standhalten kann, wird vorgeschlagen, dass der Boden (3) aus einer im Wesentlichen flach verlaufenden Grundplatte (4) und einem sich an deren Außenrand anschließenden und sich nach oben konisch erweiternden Ring (5) besteht, an dessen oberen Rand der untere Rand eines kuppelartigen Gehäuses (2) anschließt.

Die Grundplatte (4) selbst wird verstärkt, indem an ihrer Unterseite eine Vielzahl von parallel verlaufenden Rippen (9) vorgesehen sind, die sich vorzugsweise jeweils über die Ausdehnung der Grundplatte (4) erstrecken. Die Rippen (9) verlaufen somit auf parallelen Sekanten und dabei jeweils durchgehend von einem zum anderen Ende der Sekante.

## Beschreibung

Die Erfindung bezieht sich auf einen aus Kunststoff gefertigten Erdtank, insbesondere Regenwassertank mit einem Boden und einem sich darüber erstreckenden kuppelartigen Gehäuse mit einem unteren umlaufenden Rand, der an den Rand des Bodens anschließt.

solche aus Kunststoff hergestellten Erdtanks sind allgemein bekannt, beispielhaft sei auf die DE 199 14 008 C2 verwiesen.

Sie haben den Vorteil, dass sie relativ leicht sind. Die leichte Bauform hat aber auch einen Nachteil: Da das Grundwasser einen hydrostatischen Druck auf die Seitenwände des Gehäuses und auf den Boden ausübt, wird ein leerer Erdtank durch den daraus resultierenden Auftrieb nach oben aus dem Erdboden gedrückt. Um dies zu vermeiden wird der Tank im Allgemeinen belastet bzw. in ausreichender Weise im Erdreich verankert. Der Druck, der auf die Seitenwände und auf den Boden ausgeübt wird, bleibt aber weiterhin bestehen. Wenn der Tank leer ist, muss dieser durch die Konstruktion des Tanks abgestützt werden, damit der Tank nicht zusammengedrückt wird.

Da das Gehäuse des Erdtanks im Allgemeinen rotationssymmetrisch zu einer vertikalen Achse ist und somit einen runden Querschnitt aufweist, kann der seitliche Druck auf die Seitenwände sehr gut abgestützt werden.

Der Druck auf den Boden kann allerdings diesen ohne entsprechende Gegenmaßnahmen stark aufwölben, was auf Dauer zu einem Bruch des Bodens führen würde. Es ist daher schon vorgeschlagen worden, den Boden mit sternförmig verlaufenden Rippen zu versehen, was sich aber insbesondere bei großen Bodenflächen, die für ein großes Tankvolumen notwendig sind, als nicht ausreichend erwiesen hat.

Die Erfindung beruht damit auf der Aufgabe, einen Erdtank darzustellen, der ein ausreichendes Volumen hat und in der Lage ist, dem Grundwasserdruck standzuhalten.

Zur Lösung dieser Aufgabe sieht die Erfindung vor, dass der Boden aus einer im Wesentlichen flach verlaufenden Grundplatte und einem sich an deren Außenrand anschließenden und sich nach oben konisch erweiternden Ring besteht, an dessen oberen Rand der untere Rand des Gehäuses anschließt.

Der hydrostatische Druck, der auf den Ring wirkt, kann von diesem, ohne dass weitere Verstärkungsmaßnahmen notwendig wären, vielmehr allein auf Grund seiner rotationssymmetrischen Form abgestützt werden. Der Druck, der auf die Grundplatte wirkt, macht es zwar notwendig, Versteifungsmaßnahmen zu ergreifen. Da die Grundplatte aber im Durchmesser kleiner ist als der Durchmesser des Gehäuses, ist der Aufwand dafür gering, so dass der Boden insgesamt mit geringem Aufwand so versteift werden kann, dass er bei einem hydrostatischen Druck nur wenig oder gar nicht aufgewölbt wird.

Die Stabilität des Ringes ist besonders gut, wenn die Konusfläche gerade verläuft, was bedeutet, dass eine beliebige Verbindungslinie zwischen dem oberen und dem unteren Rand des Ringes, die in einer Ebene verläuft, in der auch die Rotationsachse des Ringes liegt, gerade ist.

Die Grundplatte wird besonders gut vom Ring gestützt bzw. gespannt flach gehalten, wenn der Übergang zwischen der Grundplatte und dem Ring von einem Winkel gebildet wird. Ein gebogener Übergang, wie er in der DE 199 14 008 C2 gezeigt ist, neigt nämlich dazu, vom hydrostatischen Druck des Grundwassers verbogen zu werden.

Die Grundplatte selbst wird verstärkt, indem an ihrer Unterseite eine Vielzahl von parallel verlaufenden Rippen vorgesehen sind, die sich vorzugsweise jeweils über die Ausdehnung der Grundplatte erstrecken. Die Rippen verlaufen somit auf parallelen Sekanten und dabei jeweils durchgehend von einem zum anderen Ende der Sekante.

Die Rippen verhindern in erster Linie eine Aufwölbung der Grundplatte quer zu ihnen, da die Rippen von Stegen gebildet werden, die nur schwer bezogen auf ihre Höhe aufgebogen werden können. Aber auch eine Aufwölbung parallel zu den Rippen wird verhindert, da die Rippen mit dem sie jeweils verbindenden Bodenabschnitt Längsgewölbe bilden, deren Form nur schwer verändert werden kann.

Hinzu kommt, dass der winkelige Übergang zwischen der Grundplatte und dem Ring einen stabilen Rahmen bildet, der nur schwer zusammengezogen werden kann, was Voraussetzung wäre, um den Boden aufwölben zu können.

Eine ausreichende Stabilität der Rippen wird erreicht, wenn diese senkrecht von der Grundplatte abstehen und sich ihre Querschnitte nach unten verjüngen.

Die gewölbeartige Querstruktur der einzelnen streifenartigen Bodenabschnitte wird ausgeprägter, wenn auf der Oberseite der Grundplatte genau oberhalb der Rippen Rillen verlaufen.

Ein solcher Tank kann vorzugsweise durch Rotationsformen hergestellt werden.

Um den Wasserdruck auf den Tank zu verringern, sieht die Erfindung weiterhin vor, dass der Erdtank in einem Erdschacht angeordnet ist und dabei von einem Schotterring umgeben ist und auf einem Schotterbett aufsitzt, wobei insbesondere der Ring im Kontakt mit dem Schotterbett steht. Die Anmelderin hat mit einer solchen Anordnung gute Erfahrungen gemacht. Offensichtlich sorgt das Schotterbett für eine gute Drainage.

Im Folgenden wird an Hand eines Ausführungsbeispieles die Erfindung näher erläutert. Dazu zeigen:
- Fig. 1: einen Querschnitt durch einen Erdtank gemäß der Erfindung und die
- Fig. 2: eine Teildarstellung eines quer geschnittenen Bodens.

Der Erdtank 1 besteht aus einem Gehäuse 2 und einem Boden 3, der einerseits aus einer Grundplatte 4 und einem daran anschließenden konussförmigen Ring 5 besteht. Das Gehäuse 2 des Erdtankes 1 hat die Form einer Kuppel, die zumindest in ihrem unteren Abschnitt 6 rotationssymmetrisch geformt ist. Im einfachsten Fall wird der untere Abschnitt 6 des Gehäuses 2 von einem Hohlzylinder gebildet.

An der Oberseite des Gehäuses 2 befindet sich ein verschließbares Einstiegsloch 7 zum Einstieg in den Erdtank 1; seitlich ist ein Zulaufrohr 8 mit einem nicht näher dargestellten Filter angeordnet, über den Regenwasser dem Erdtank 1 zufließen kann.

Die Grundplatte 4 ist eine kreisrunde Scheibe mit mehreren, parallel in eine Richtung verlaufenden stegartigen Rippen 9. An den Rand der Grundplatte 4 schließt sich der sich nach oben konisch erweiternde Ring 5 an, dessen Oberkante mit der Unterkante des Gehäuses 2 verbunden ist.

Sowohl der Übergang von der Grundplatte 4 zum Ring 5 als auch der Übergang vom Ring 5 zum Gehäuse 2 ist winklig ausgeführt. Es liegt somit jeweils ein in einem Kreis verlaufender Übergangsknick 10, 11 vor. Entscheidend für die Erfindung ist, dass der Durchmesser d der Grundplatte 4 kleiner ist als der größte Durchmesser D des Gehäuses 2 und somit nur ein relativ kleiner flacher Bodenbereich vorliegt, der unmittelbar dem Druck des Grundwassers ausgesetzt ist.

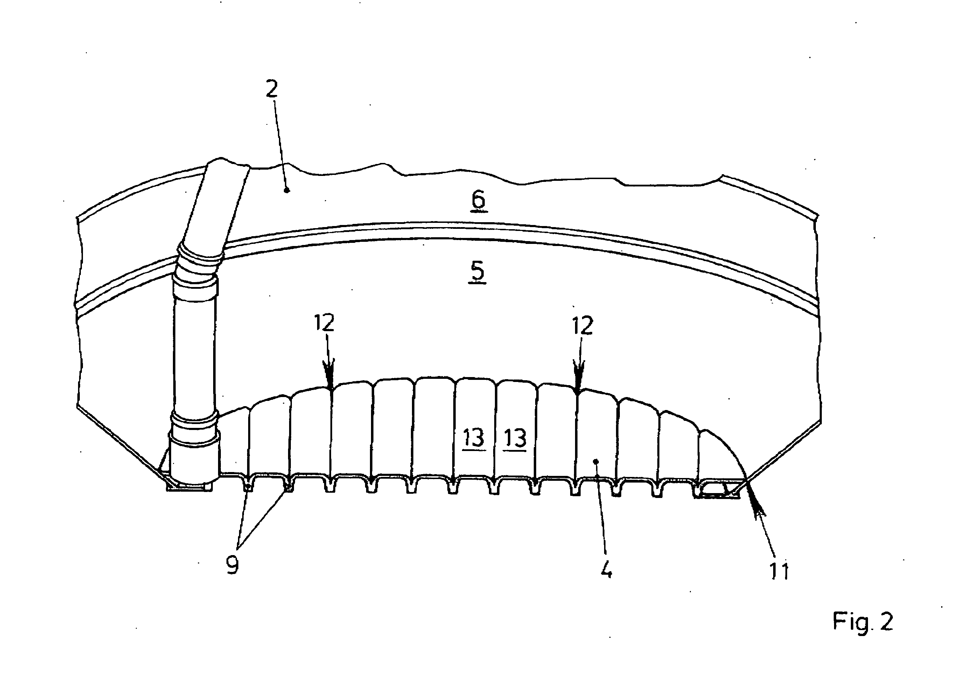

Wie der Fig. 2 zu entnehmen ist, ist die Grundplatte 4 an ihrer Unterseite durch eine Vielzahl von parallel verlaufenden stegartigen Rippen 9 verstärkt, die nach unten gerichtet sind und die sich nach unten hin im Querschnitt verjüngen. Auf der Oberseite verlaufen genau oberhalb der Rippen 9 Rillen 12. Die Grundplatte 4 besteht somit aus einer Anzahl von Bodenstreifen 13, die jeweils eine längsgewölbeartige Struktur aufweisen.

Ein derartiger Erdtank wird durch Rotationsformen, auch Rotationssinterverfahren genannt, hergestellt. Ein Kunststoffgranulat wird dazu in eine äußere Form gegeben, die sowohl erhitzt als auch in eine um mehrere Achsen verlaufende Drehbewegung gesetzt wird, so dass das schmelzende Granulat sich gleichmäßig über die innere Wandung der Form verteilt und damit den Tank formt. Gehäuse 2, Ring 5 und Grundplatte 4 bilden somit eine nahtlose Einheit, die anschließend aufgeschnitten wird, um das Einstiegsloch 7 und den Zugang für das Zulaufrohr 8 zu erhalten.

Da die Rippen 9 nur in eine Richtung verlaufen und sich nach unten hin verjüngen, kann der Tank, sobald die Kunststoffmasse abgekühlt ist, relativ leicht der Form entnommen werden.

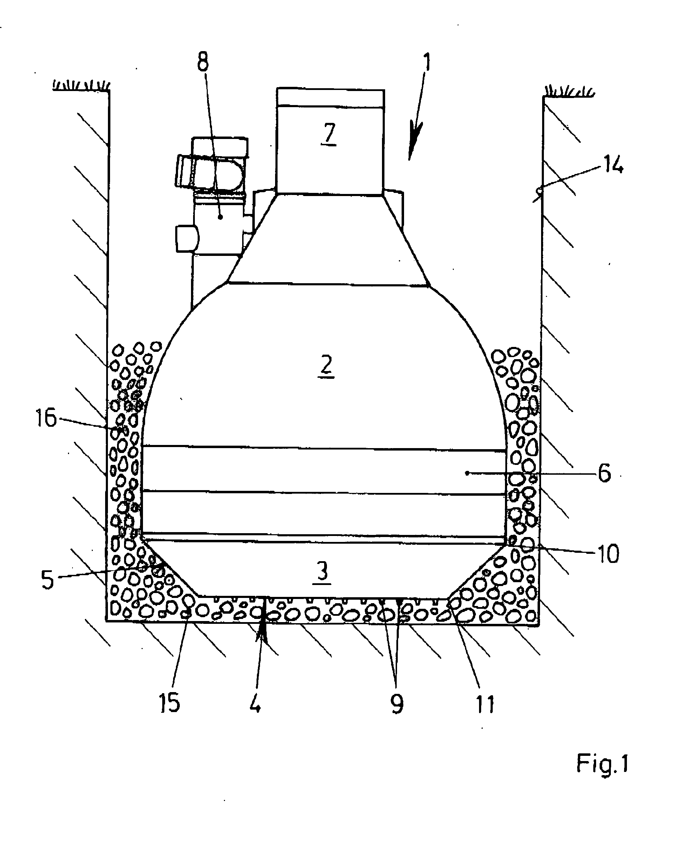

Wie der Fig. 1 zu entnehmen ist, wird der Erdtank 1 in einen Erdschacht 14 eingebracht, wo er auf einem Schotterbett 15 aufsitzt und von einem Schotterring 16 umgeben ist.

### Bezugszeichenliste

- 1: Erdtank
- 2: Gehäuse
- 3: Boden
- 4: Grundplatte
- 5: Ring

- 6: Abschnitt
- 7: Einstiegsloch
- 8: Zulaufrohr
- 9: Rippen
- 10: Übergangsknick

- 11: Übergangsknick
- 12: Rillen
- 13: Bodenstreifen
- 14: Erdschacht
- 15: Schotterbett

- 16: Schotterring

## Patentansprüche

1. Aus Kunststoff gefertigter Erdtank, insbesondere Regenwassertank mit einem Boden (3) und einem sich darüber erstreckenden kuppelartigen Gehäuse (2) mit einem unteren umlaufenden Rand, der an den Rand des Bodens (3) anschließt, **dadurch gekennzeichnet, dass** der Boden (3) aus einer im Wesentlichen flach verlaufenden Grundplatte (4) und einem sich an deren Außenrand anschließenden und sich nach oben konisch erweiternden Ring (5) besteht, an dessen oberen Rand der untere Rand des Gehäuses (2) anschließt.

2. Erdtank nach Anspruch 1, **dadurch gekennzeichnet, dass** die Konusfläche des Ringes (5) gerade verläuft.

3. Erdtank nach Anspruch 2, **dadurch gekennzeichnet, dass** der Übergang zwischen der Grundplatte (4) und dem Ring (5) von einem Winkel gebildet ist.

4. Erdtank nach einem der vorhergehenden Ansprüche, **dadurch gekennzeichnet, dass** an der Unterseite der Grundplatte (4) eine Vielzahl von parallel verlaufenden Rippen (9) vorgesehen sind.

5. Erdtank nach Anspruch 4, **dadurch gekennzeichnet, dass** sich jede Rippe (9) über die Länge der Sekante erstreckt, auf der sie sich befindet.

6. Erdtank nach Anspruch 5, **dadurch gekennzeichnet, dass** die Rippen (9) senkrecht von der Grundplatte (4) abstehen und sich ihre Querschnitte nach unten hin verjüngen.

7. Erdtank nach einem der Ansprüche 4 bis 6, **dadurch gekennzeichnet, dass** auf der Oberseite der Grundplatte (4) oberhalb der Rippen (9) Rillen (12) verlaufen.

8. Erdtank nach einem der vorhergehenden Ansprüche, **dadurch gekennzeichnet, dass** dieser durch Rotationsformen hergestellt ist.

9. Erdtank nach einem der vorhergehenden Ansprüche, **dadurch gekennzeichnet, dass** der Erdtank (1) in einem Erdschacht (14) angeordnet ist und darin von einem Ring (16) aus Schotter umgeben ist.

10. Erdtank nach Anspruch 9, **dadurch gekennzeichnet, dass** der Erdtank (1) auf einem Schotterbett (15) aufsitzt, wobei insbesondere der Ring (5) im Kontakt mit dem Schotterbett (15) steht.
